(19) Europäisches Patentamt
European Patent Office
Office européen des brevets

(11) **EP 2 140 529 B1**

(12) **EUROPEAN PATENT SPECIFICATION**

(45) Date of publication and mention
of the grant of the patent:
**18.05.2011 Bulletin 2011/20**

(51) Int Cl.:
*H01S 3/036* (2006.01)   *H01S 3/134* (2006.01)
*H01S 3/225* (2006.01)

(21) Application number: **08744395.8**

(22) Date of filing: **26.03.2008**

(86) International application number:
**PCT/US2008/058293**

(87) International publication number:
**WO 2008/118975 (02.10.2008 Gazette 2008/40)**

(54) **METHOD AND APPARATUS FOR EFFICIENTLY OPERATING A GAS DISCHARGE EXCIMER LASER**

VERFAHREN UND VORRICHTUNG FÜR DEN EFFIZIENTEN BETRIEB EINES GASENTLADUNGSEXCIMERLASERS

PROCÉDÉ ET APPAREIL POUR FAIRE FONCTIONNER DE FAÇON ÉCONOMIQUE UN LASER À EXCIMÈRE À DÉCHARGE DE GAZ

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **27.03.2007 US 920272 P**

(43) Date of publication of application:
**06.01.2010 Bulletin 2010/01**

(73) Proprietor: **Photomedex, Inc.**
**Montgomeryville, PA 18936 (US)**

(72) Inventors:
• **LEVATTER, Jeffrey I.**
**Solana Beach, CA 92075 (US)**
• **MORRIS, James, H.**
**Encinitas, CA 92024 (US)**
• **BROOKS, David, M.**
**Oceanside, CA 92056 (US)**

(74) Representative: **Bucks, Teresa Anne**
**Boult Wade Tennant**
**Verulam Gardens**
**70 Gray's Inn Road**
**London WC1X 8BT (GB)**

(56) References cited:
| JP-A- 4 120 782 | JP-A- 5 021 868 |
| JP-A- 6 177 461 | JP-A- 8 204 274 |
| US-A- 5 642 374 | US-A1- 2005 169 341 |
| US-A1- 2006 239 322 | US-A1- 2007 030 876 |
| US-B1- 6 747 741 | |

**Description**

RELATED APPLICATIONS

This application is related to, and claims the benefit of U.S. Provisional 60/920,272, filed March 27, 2007.

BACKGROUND

Field

The present invention relates to an improvement in excimer lasers. In particular, the present invention relates to an improvement for increasing the operational lifetime, reliability, efficiency, and/or performance of such lasers.

Description of the Related Art

Excimer lasers typically comprise a mixture of noble (or "rare" or "inert") gases and halogens. When a voltage is applied to the gas mixture, the gas molecules become excited. When a noble gas is excited, it may temporarily bond with another noble gas, forming an excited dimer (or "excimer"), or much more commonly with a halogen, forming an excited complex (or "exciplex"). The spontaneous breakdown of the excimers and exciplexes, commonly referred to together as excimers, releases energy in the form of light at a specific wavelength. The excimer molecule dissociation takes on the order of nanoseconds, at which point light is no longer produced. Excimer lasers further comprise an optical cavity such that light produced by the gases resonates within the cavity.

Excimer lasers are utilized in many applications that demand approximately constant pulse energy throughout their life cycle. For example, a medical XeCl excimer laser, in which xenon is the noble gas and chlorine or HCl is the halogen, is used for phototherapy to provide substantial relief of the symptoms of several skin disorders including psoriasis. Such a laser may deliver, for example, about 10 mJ pulses between about 100 and 500 pulses per second to the diseased skin over a typical area of about 4 $cm^2$. The number of light pulses to be delivered is determined by the skin type, location on the body, and severity of the disease. The pulses preferably have a constant energy for many applications to provide consistency in controlling applied therapeutic dosage.

As an excimer laser ages, contamination builds up within the laser gas and/or on the laser components, which reduces the pulse energy output. Eventually, the increased contamination will cause sufficient degradation in the output that the laser gas will need to be completely replaced, and eventually the chamber will need to be opened, cleaned, and refurbished. What is needed are methods for increasing the operating lifetime of the laser between such gas replacements and/or overhauls of the laser.

SUMMARY

Various embodiments of the invention, as defined in claim 1, comprise an excimer laser [0006] Various embodiments of the invention comprise an excimer laser comprising: a chamber configured to contain laser gases; first and second electrodes within the chamber, the first and second electrodes configured to energize laser gases in a region between the first and second electrodes to produce light emission from the laser gases; a plurality of reflective elements forming an optical resonant cavity configured to produce a laser beam from the light emission; a detector configured to measure an energy of the laser beam; a gas flow apparatus in fluid communication with the chamber; and a controller in communication with the gas flow apparatus and the detector, wherein the controller is configured to adjust a flow of the laser gases to alter a pressure in the chamber. The gas flow apparatus comprises a single canister containing a mixture of laser gases such that the single canister is the only canister of laser gases in fluid communication with the chamber.

Some embodiments of the invention, as defined in Claim 7, comprise a method of extending the lifetime of an excimer laser comprising a chamber containing laser gases, first and second electrodes within the chamber, and a plurality of reflective elements defining an optical resonant cavity, said method comprising: setting the laser gases to a first pressure; after setting the laser gases to the first pressure, applying a voltage to the electrodes, thereby propagating a laser beam in the optical resonant cavity; operating the laser for an amount of time; after the amount of time, measuring energy of the laser beam; and changing the pressure of the laser gases to a second pressure different from said first pressure. The pressure is changed by injecting said chamber with laser gases from a single canister containing a mixture of laser gases. The single canister is the only canister of laer gases in fluid communication with the chamber.

Certain embodiments of the invention comprise a method of extending the lifetime of an excimer laser comprising a chamber containing laser gases, first and second electrodes within the chamber, and a plurality of reflective elements defining an optical resonant cavity, said method comprising: operating the laser at a first pressure of the laser gases;

measuring energy of a laser beam; adjusting voltage applied to the first and second electrodes until the energy of the laser beam is substantially equal to a target energy at a first voltage; determining if the laser is operating in an optimized state; changing from the first pressure to a second pressure if the laser is not operating in an optimized state; and after changing to the second pressure, adjusting the voltage applied to the electrodes until the energy of the laser beam is substantially equal to the target energy at a second voltage.

Other embodiments are possible and defined in dependent Claims 2-7 and 8-14.

BRIEF DESCRIPTION OF THE DRAWINGS

These and other features, aspects, and advantages of the invention disclosed herein are described below with reference to the drawings of preferred embodiments, which are intended to illustrate and not to limit the invention. The drawings comprise four figures in which:

**Figure 1** schematically depicts a family of plots of output optical pulse energy versus input voltage for a gas discharge excimer laser at different pressures.

**Figure 2** illustrates an embodiment of a gas discharge excimer laser chamber with an improved efficiency operating mode.

**Figure 3** illustrates an embodiment of a gas discharge excimer laser system with an improved efficiency operating mode and a feedback/control system.

**Figure 4** is a block diagram of a method of operating a gas discharge excimer laser with an improved efficiency operating mode.

DETAILED DESCRIPTION OF CERTAIN EMBODIMENTS

Although certain preferred embodiments and examples are disclosed below, it will be understood by those in the art that the invention extends beyond the specifically disclosed embodiments and/or uses of the invention and obvious modifications and equivalents thereof. Thus, it is intended that the scope of the invention herein disclosed should not be limited by the particular disclosed embodiments described below.

As described above, as an excimer laser ages, contamination builds up within the laser gas and/or on the laser components, which reduces the pulse energy. In certain embodiments, specific materials can be used to fabricate the pressure vessel, the electrodes, the heat exchanger, and the fan of the laser to extend the lifetime of the laser. The criteria for selecting the appropriate materials for the laser can be found in U.S. Patent No. 4,891,818, entitled "Rare Gas-Halogen Excimer Laser". Electrical energy stored in capacitors supplies energy to the laser gas via an electrical glow discharge. To maintain a constant pulse energy, the energy stored in the capacitors can be increased by increasing the charge voltage and hence the input energy, thereby compensating for degradation of the laser gas and laser components.

The efficiency of the laser is characterized by the ratio of laser pulse energy (U) to the energy stored in the capacitors (Uc), as shown in Equation 1.

$$Eff = \frac{U}{U_C} \qquad\qquad \text{(Eqn. 1)}$$

The energy stored in the capacitors is directly proportional to the capacitance (C) of the capacitors and the square of the charge voltage (V), as shown in Equation 2.

$$U_C \propto C \cdot V^2 \qquad\qquad \text{(Eqn. 2)}$$

Thus, the efficiency of the laser is inversely proportional to the square of the charge voltage, as shown in Equation 3.

$$Eff \propto \frac{U}{V^2} \qquad\qquad \text{(Eqn. 3)}$$

Therefore, when the charge voltage is increased to keep the laser pulse energy, U, constant to compensate for gas and component degradation, the efficiency of the laser decreases with the square of that charge voltage. Although charge voltage can be continually increased to maintain output levels, there is a point at which the efficiency of the laser is so low that continued operation becomes impractical. In particular, operation at high voltage levels cause failure of laser components such as the electrodes.

Breakdown of components in the chamber, such as the electrodes, necessitates major maintenance and/or disassembly of the laser to be frequently undertaken. Such repairs and the associated downtime of the laser both introduce costs to, and reduce the productivity of, the laser. In addition, because the toxic and corrosive gases used in excimer lasers must be carefully handled during disassembly and subsequent reassembly of the laser, such procedures are complicated and potentially hazardous. This safety hazard is particularly troublesome when the excimer laser is utilized for medical procedures and is serviced proximate to locations where such medical treatment is provided. Accordingly, frequent disassembly is undesirable.

One way to reduce the frequency of such maintenance is to operate at a lower voltage or to decrease the rate at which the charge voltage is increased when adjusting the laser to maintain constant output energy. As described more fully below, by adjusting the pressure of the gases in the laser, the voltage need not be increased as quickly, thereby subjecting the entire laser system to less stress.

Excimer lasers are generally operated at an internal gas pressure that optimizes the efficiency for the initial charge voltage and electrode gap spacing. This internal pressure is traditionally not thereafter adjusted. Moreover, the pressure is traditionally not adjusted to maintain a constant optical output or to reduce the amount of increase in the charge voltage.

As described above, operation of excimer lasers at a point of increased or maximum efficiency is desirable to increase or maximize component reliability (e.g., by reducing the stress on the electrodes, etc.) and to increase or maximize the longevity of the laser gas. Referring again to Equation 3, when the charge voltage is at a lower value, the efficiency is typically higher. As charge voltage increases, the efficiency usually decreases. Accordingly, increases in the voltage to provide for constant optical output yield reduced efficiency and lifetime.

In various embodiments described herein, the optical output at different charge voltages and the pressure level of the laser gas are monitored to determine a suitable pressure and voltage. When charge voltage is to be increased to maintain pulse energy, the pressure of the laser gas is adjusted upward or downward to reduce or eliminate the change in voltage needed and thereby maintain efficiency. In certain embodiments, for example, the gas pressure is adjusted by at least about 13.8 KPa (2 psi), up to about 34.5 KPa (5 psi), or more. For example, a laser with an initial gas pressure of 241 KPaa (35 psia) and an initial charge voltage of 6,500 volts may be increased to a gas pressure of 310 KPaa (45 psia) and a charge voltage of 8,000 volts after a certain amount of time or number of pulses. This mode of operation provides a much higher overall operating efficiency and a longer service-free operating period than existing excimer lasers that modify only charge voltage and not pressure. For example, the laser lifetime may be increased from between about 5 and 12 million pulses to greater than about 60 million pulses or more. In certain embodiments, adjusting the pressure of the laser gas upward or downward can result in a laser lifetime of about 100 million pulses or more. Additionally, the use of lower charge voltages advantageously increases the lifetime of the laser gas and laser components such as the electrodes, laser windows, etc.

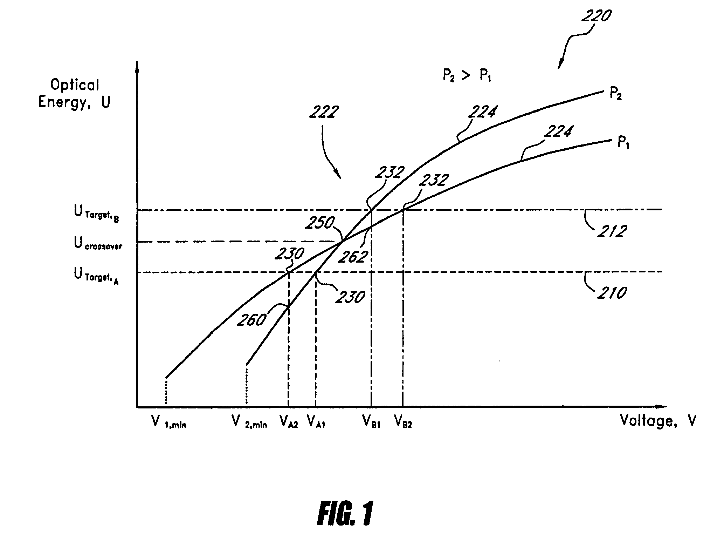

To understand how various embodiments described herein can be used to reduce the amount of voltage applied to the laser over time to maintain constant output, the dependency of output pulse energy on voltage and pressure is shown in Figure 1. In particular, Figure 1 schematically illustrates a family of curves 220, varying according to differing pressures in the chamber, located on a plot of optical pulse energy (U) in arbitrary units versus charge voltage (V) in arbitrary units. In the region 222, the pulse energy varies monotonically and approximately linearly with the charge voltage. Each pressure curve $P_1$, $P_2$ includes a "round-off" point 224 at which further increases in charge voltage produce a substantially smaller or negligible change in pulse energy. The shape and magnitude of the curves 220 vary from laser to laser and may change for a single laser over time. In Figure 1, pressure curve $P_2$ is at greater pressure than pressure curve $P_1$. Other pressure curves may also apply.

A horizontal line 210 represents a first target optical pulse energy $U_{Target,A}$ selected by the user or otherwise established. This first target optical pulse energy $U_{Target,A}$ desirably remains constant in certain embodiments. The curves $P_1$, $P_2$ intersect the line $U_{Target,A}$ at a plurality of voltages 230. Thus, there is a different charge voltage that will result in the target pulse energy $U_{Target,A}$ for each of the different pressures curves $P_1$, $P_2$. Various embodiments described in more detail below utilize this property to enable reduced voltages to be applied to the laser to maintain substantially constant optical output.

For most lasers, although there is usually a pressure that will produce the target pulse energy $U_{Target,A}$ at a given voltage, an upper or maximum recommended pressure may exist for a given system (e.g., due to the strength of the seals used). A lower or minimum recommended voltage, (e.g., $V_{1,min}$ for the curve $P_1$ and $V_{2,min}$ for the curve $P_2$) may also exist for each pressure curve 220 in a given system. An upper or maximum recommended voltage, $V_{max}$, (not shown) may also exist for each pressure curve 220 in a given system. In various preferred embodiments, the combination of pressure and voltage intersects the target pulse energy $U_{Target,A}$ within the linear region 222.

For illustrative purposes, **Figure 1** also shows a horizontal line 212 representing a second target optical pulse energy $U_{Target,B}$ selected by the user or otherwise established. The curves $P_1$, $P_2$ intersect the line $U_{Target,B}$ at respective voltages 232. Thus, there is a charge voltage that will result in the target pulse energy $U_{Target,B}$ for the each of the different pressures curves $P_1$, $P_2$.

**Figure 1** also shows that each pressure curve intersects another pressure curve at a crossover point. For example, the pressure curve $P_1$ intersects the pressure curve $P_2$ at the crossover point 250. As will be further illustrated below, when the target optical pulse energy is less than the optical pulse energy $U_{Crossover}$ at the crossover point 250 (e.g., when the target energy is $U_{Target,A}$), a decrease in pressure (e.g., from $P_2$ to $P_1$) results in a lower required voltage (from $V_{A1}$ to $V_{A2}$) Likewise, when the target optical pulse energy is greater than the energy $U_{Crossover}$ at the crossover point 250 (e.g., when the target energy is $U_{Target,B}$), an increase in pressure (e.g., from $P_1$ to $P_2$) results in a lower required voltage (from $V_{B1}$ to $V_{B2}$).

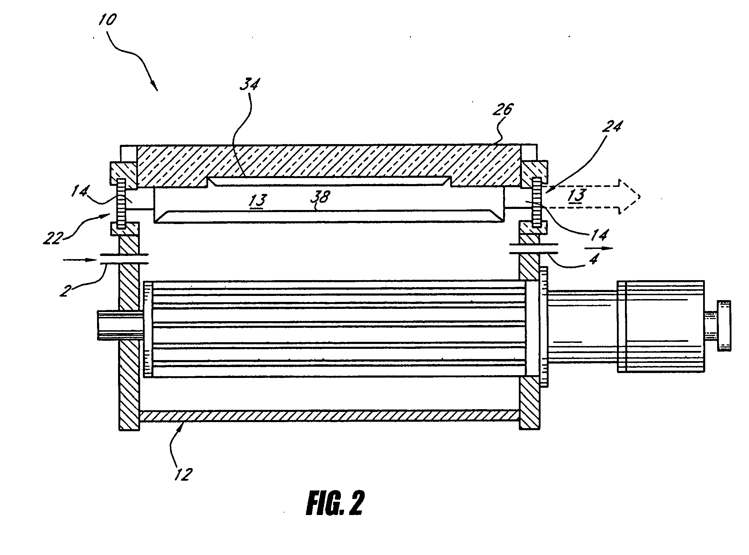

**Figure 2** illustrates an embodiment of a gas discharge laser 10 with an improved efficiency operating mode. An example gas discharge laser system is described in detail in U.S. Patent No. 7,257,144, entitled "Rare Gas-Halogen Excimer Laser with Baffles". The laser 10 comprises a chamber 12 filled with noble and halogen or halogen-containing gases, for example xenon and chlorine-containing hydrogen chloride, respectively. **Figure 2** shows gas input and output ports 2, 4 through which gas may enter and exit the chamber 12. These gas input and output ports 2, 4 may be connected to lines or conduits (not shown). The position of the gas input and output ports 2, 4 may be located at other positions in the chamber 12 (e.g., a gas input port 2 and/or the gas output port 4 below the fan).

The laser 10 further comprises an optical resonator 14 defining an optical path 13 at least partially included in the chamber 12 such that light propagating within the resonator 14 passes through the gas in the chamber 12. Electrodes 34, 38 are included within the chamber 12 on opposite sides of the optical path 13. A voltage applied to the electrodes 34, 38 excites the gases within the chamber 12, and particularly within the optical path 13 therebetween. Laser energy is thereby generated in the optical path 13 in the resonant cavity 14.

In the embodiment shown in **Figure 2,** the resonant cavity 14 is formed by first and second reflective mirrors 22 and 24, respectively, which are disposed at two opposing internal faces of the chamber 12. The first mirror 22 is designed to have a nearly 100% reflectance (e.g., about 99% or greater). The second mirror 24 is designed to be partially reflecting. The second mirror 24 may allow, for example, about 50% of the laser energy striking it to pass through and may reflect about 50% of the laser energy back to the first mirror 22. In other embodiments, between about 1% and 90% of the laser energy striking the second mirror 24 passes through and between about 99% and 10% is reflected. Accordingly, in some embodiments, the first mirror 22 is more reflective, and may be substantially more reflective, than the second mirror 24. Still other designs and other values of reflectivity are possible.

The laser energy can be coupled from the chamber 12 and delivered to another location, for example a treatment site on a dermatological patient, by using a flexible or rigid optical line (not shown) such as a fiber optic cable or liquid light guide. An example liquid light guide is provided in U.S. Patent No. 4,927,231, entitled "Liquid Filled Flexible Distal Tip Light Guide". The laser energy can also be delivered by using a delivery system (not shown) including one or more mirrors. In certain such systems, the light may be guided or may propagate in free space such as through the air. Other designs are also possible.

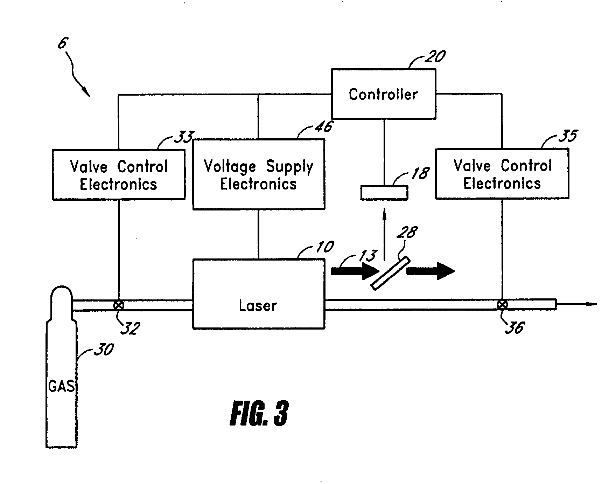

As described above, the pulse energy delivered from the laser 10 will degrade over time. In certain preferred embodiments such as shown in **Figure 3,** a feedback/control system 6 is provided to control the output of the laser 10, for example to maintain the laser beam at a substantially constant output level. The feedback/control system 6 includes a detector or sensor 18 that determines the laser output intensity. The detector 18 is linked to a controller 20 that controls one or more operating parameters of the laser 10. For example, in the illustrated embodiment, the controller 20 is configured to adjust the charge voltage, V, and the gas pressure, P, in the chamber 12 in order to maintain a target pulse energy $U_{Target}$. In one embodiment, for example, the controller 20 may be in communication with a gas inlet valve 32, a gas outlet valve 36, and voltage supply electronics 46 electrically connected to at least one of the electrodes 34, as well as the detector 18 (e.g., as shown in **Figure 3**). The controller 20 can be electrically connected to the gas inlet and outlet valves 32, 36 through valve control electronics 33, 35, which can automatically open or close the valve and/or control the extent that the valve is open.

In some embodiments, the controller 20 comprises a microprocessor or computer that receives input from the detector 18 and drives the voltage supply 46 and valve control electronics 33, 35, which may comprise digital or analog electronics. Suitable A/D and D/A electronics may be used where appropriate. Other configurations are also possible.

A gas source 30 represented by a gas canister is also shown; however, this gas source 30 is not so limited. One or more gas sources 30 may be included and may provide more than one gas, either separately or in a mixture (e.g., the same mixture as in the chamber). In certain examples, multiple gas sources, each with separately controlled valves, supply different gases. These separate valves can be used to separately control the amount of gas introduced into chamber 12. In certain embodiments, the gas source 30 is at a higher pressure than the chamber 12 such that, upon opening of the gas inlet valve 32, laser gases flow from the gas source 30 into the chamber 12. In some embodiments, pumps may be used to flow laser gas from the gas source 30 into the chamber 12.

In order to monitor the output from the chamber 12, the detector 18 may be disposed in an optical path 13 forward of the second mirror 24 (Figure 2) so as to receive light transmitted through the second mirror 24. Another partially reflecting surface or mirror 28, e.g., a beam splitter, is set in the path 13 of the light that is transmitted through the second mirror 24. The beam splitter 28 may shunt, for example, between about 1 and 5% of the emitted energy into the optical detector 18. In other embodiments, the detector 18 may be disposed in an optical path with respect to the first mirror 22 (Figure 2) to measure any non-reflected energy transmitted through. Such an embodiment may employ a device such as an optical integrating sphere. An example laser utilizing such configurations is provided in U.S. Patent Pub. No. 2007/0030877, entitled "Apparatus and Method for Monitoring Power of a UV Laser".

In certain embodiments, the gas pressure in the chamber 12 is increased by opening the inlet valve 32 and adding gas to the chamber 12 from the gas source 30 (e.g., because the gas source 30 is at a higher pressure than the chamber 12) while substantially preventing laser gases from flowing out of the chamber 12. In certain embodiments, the gas pressure in the chamber 12 is decreased by opening the outlet valve 36 (e.g., because the chamber 12 is at a higher pressure than the system downstream of the chamber 12) while substantially preventing laser gases from flowing into the chamber 12. The gas released from the chamber 12 may be vented to the atmosphere (e.g., after passing through a scrubber). An example laser configured to add and remove gas is provided in U.S. Patent Pub. No. 2007/0030876, entitled "Apparatus and Method for Purging and Recharging Excimer Laser Gases".

Referring again to **Figure 1**, as an example, the optical output intensity U versus charge voltage V is described by a family of pressure curves. After the laser is run for a time, the optical intensity will degrade such that the conditions of the chamber are changed to maintain substantially constant optical output intensity. As described above, the pressure traditionally remains constant, and the charge voltage V is adjusted to maintain the substantially constant output intensity. Because, for each pressure curve, optical energy U increases with charge voltage V, the charge voltage V is increased to compensate for a decrease in optical energy. After a certain amount of time, the charge voltage V cannot be increased to yield the target optical output intensity without damaging the components of the laser.

By contrast, as depicted in **Figure 1,** a change in pressure, with or without a change in charge voltage, can also be used to yield the desired optical energy. As an example, if the pressure in the chamber after time $t_{n+1}$ is $P_2$ and the target optical output intensity is $U_{Target,A}$, the charge voltage at point 260 is too low to yield $U_{Target,A}$. However, rather than increasing the charge voltage from $V_{A2}$ to $V_{A1}$ on the pressure curve $P_2$, the pressure may be decreased to $P_1$ to produce $U_{Target,A}$ at the point 230 on the pressure curve $P_1$, without changing the charge voltage $V_{A2}$. As another example, if the pressure in the chamber after time $t_{n+1}$ is $P_1$ and the target optical output intensity is $U_{Target,B}$, the charge voltage at point 262 is too low to yield $U_{Target,B}$. However, rather than increasing the charge voltage from $V_{B1}$ to $V_{B2}$ on the pressure curve $P_1$, the pressure may be increased to $P_2$ to produce $U_{Target,B}$ at the point 232 on the pressure curve $P_2$, without changing the charge voltage $V_{B1}$.

In some embodiments, the chamber is designed to operate within a certain pressure range. As such, although a certain change in pressure without a change in charge voltage may produce the desired optical output intensity, a different change in pressure along with a change in charge voltage that also produces the desired optical output may be utilized, for example, to keep the pressure in the chamber closer to a desired operating range.

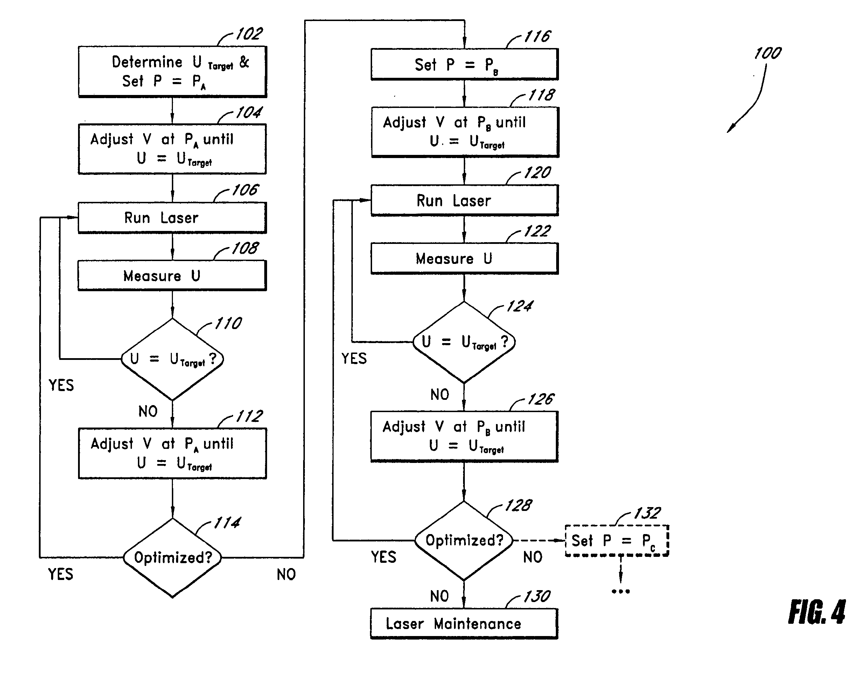

**Figure 4** is a block diagram 100 of an example procedure that the controller 20 may use to adjust pressure and charge voltage in order to maintain constant pulse energy. As represented by a first block 102, the target pulse energy $U_{Target}$ is determined and the pressure in the laser 10 is set at $P_A$. In some embodiments, $P_A$ is the pressure which produces the lowest charge voltage V that results in the target pulse energy $U_{Target}$ (e.g., $P_1$ in **Figure 1).** In certain embodiments, $U_{Target}$ is determined from a device in communication with the laser 10, for example, a medical handpiece, will use a specific pulse energy. The target pulse energy $U_{Target}$ may depend on other considerations.

As represented by block 104, the charge voltage V is adjusted at $P_A$ such that the initial pulse energy U is substantially the same as the target pulse energy $U_{Target}$. As depicted in block 106, the laser 10 is then operated for an amount of time. The pulse energy U that is output by the laser 10 is then measured (e.g., by a detector 18 in communication with the controller 20), as shown in block 108. As represented by decision diamond 110, the controller 20 determines whether the pulse energy U is substantially the same as the target pulse energy $U_{Target}$. If the pulse energy U is substantially the same as the target pulse energy $U_{Target}$, the sequence in the blocks 106, 108, 110 is repeated. The repeated sequence includes: running the laser 10; measuring the pulse energy U; and comparing the pulse energy U to the target pulse energy $U_{Target}$. If the pulse energy U is not substantially the same as the target pulse energy $U_{Target}$, the voltage V is adjusted at $P_A$ until the pulse energy U is substantially the same as the target pulse energy $U_{Target}$ (i.e., by increasing or decreasing the voltage V), as depicted in block 112.

As represented by decision diamond 114, the controller 20 determines whether the conditions of the laser 10 are optimized. If the voltage V is such that the conditions of the laser 10 are optimized (e.g., if the laser 10 is running at least at a predetermined minimum efficiency and/or if the voltage V is not greater than a predetermined voltage $V_{max}$), the sequence in the blocks 106, 108, 110, 112, 114 is repeated. The repeated sequence includes: running the laser 10; measuring the pulse energy U; comparing the pulse energy U to the target pulse energy $U_{Target}$; continuing to run the laser 10 if substantially the same or adjusting the charge voltage V at $P_A$ until substantially the same; and determining if the conditions of the laser 10 are optimized. If the voltage V is such that the conditions of the laser 10 are not optimized (e.g., if the laser 10 is not running at a predetermined minimum efficiency or if the voltage V is greater than a predetermined voltage $V_{max}$), the pressure is adjusted to $P_B$, as shown in block 116.

As described above, the pressure $P_B$ may be higher than or lower than the pressure $P_A$, depending on the target pulse energy $U_{Target}$. In some embodiments, $P_B$ is the maximum operating pressure of the laser 10. In certain alternative embodiments, $P_B$ is less than the maximum operating pressure of the laser 10. $P_B$ can be selected according to the particular design, operating characteristics and performance, applications, etc. of the laser 10 and gases in the chamber 12. In certain embodiments, it may be desirable to select $P_B$ so as to reduce (e.g., minimize) the value of the charge voltage V.

As represented by block 118, the charge voltage V is adjusted at $P_B$ such that the initial pulse energy U is substantially the same as the target pulse energy $U_{Target}$. As depicted in block 120, the laser 10 is then operated for an amount of time. The pulse energy U that is output by the laser 10 is then measured (e.g., by a detector 18 in communication with the controller 20), as shown in block 122. As represented by decision diamond 124, the controller 20 determines whether the pulse energy U is substantially the same as the target pulse energy $U_{Target}$. If the pulse energy U is substantially the same as the target pulse energy $U_{Target}$, the sequence in the blocks 120, 122, 124 is repeated. The repeated sequence includes: running the laser 10; measuring the pulse energy U; and comparing the pulse energy U to the target pulse energy $U_{Target}$. If the pulse energy U is not substantially the same as the target pulse energy $U_{Target}$, the voltage V is adjusted at $P_B$ until the pulse energy U is substantially the same as the target pulse energy $U_{Target}$ (i.e., by increasing or decreasing the voltage V), as depicted in block 126.

As represented by decision diamond 128, the controller 20 determines whether the conditions of the laser 10 are optimized. If the voltage V is such that the conditions of the laser 10 are optimized (e.g., if the laser 10 is running at least at a predetermined minimum efficiency and/or if the voltage V is not greater than a predetermined voltage $V_{max}$), the sequence in the blocks 120, 122, 124, 126, 128 is repeated. The repeated sequence includes: running the laser 10; measuring the pulse energy U; comparing the pulse energy U to the target pulse energy $U_{Target}$; continuing to run the laser 10 if substantially the same or adjusting the charge voltage V at $P_B$ until substantially the same; and determining if the conditions of the laser 10 are optimized. If the voltage V is such that the conditions of the laser 10 are not optimized (e.g., if the laser 10 is not running at a predetermined minimum efficiency or if the voltage V is greater than a predetermined voltage $V_{max}$), then maintenance on the laser 10 is performed, as represented by block 130. This maintenance may include recharging the gases, cleaning the chamber, and/or replacing or repairing components. The laser 10 may indicate to the user that maintenance is required, for example by an alarm or indicator. In some embodiments, the controller 20 shuts down the laser 10 if charge voltage is above $V_{max}$ or if pressure exceeds $P_{max}$.

In certain alternative embodiments, the laser 10 is configured to adjust between a plurality of pressures. For example, if the voltage V is such that the conditions of the laser 10 are not optimized (e.g., if the laser 10 is not running at a predetermined minimum efficiency and/or if the voltage V is greater than a predetermined voltage $V_{max}$), the pressure may be adjusted to $P_C$, as shown in block 132. The process may then continue through a set of steps similar to those represented in blocks 104, 106, 108, 110, 112, 114 and 118, 120, 122, 124, 126, 128. It will be appreciated that the number of possible pressures that the laser 10 may be set at between a minimum pressure and a maximum pressure could be large (e.g., infinite).

The pressure, P, may be increased or decreased to obtain the target optical intensity, $U_{Target}$. The voltage, V, may be increased or decreased to obtain the target optical intensity, $U_{Target}$, although in certain preferred embodiments the voltage, V, is increased as components of the laser 10 age. Such an increase in voltage, V, however, may be smaller per unit time than in systems in which the pressure, P, remains constant.

Other methods are also possible. For example, other methods of determining the suitable voltage and pressure may be used. Other parameters in addition or in alternative to $V_{max}$ and efficiency can be used to determine when maintenance is appropriate. More generally, other steps may be added, steps may be removed, or all or a portion of the steps may be reordered.

Referring again to **Figure 3,** the laser 10 and feedback/control system 6 may be configured differently. For example, the valve controls 33, 35 controlling the ingress and egress of the gases may be part of or within the chamber 12. Different configurations of the gas flow lines and connections therebetween are also possible. Additionally, all or part of the valve control electronics 33, 35 and the voltage supply electronics 46 can be included in, and can be a part of, the controller 20. The controller 20 may also include additional components and/or electronics and may comprise a plurality of different and separate components. Additional electronics or other components may be included in the feedback/control system 6. For example, additional electronics, such as an amplifier or signal processing electronics, may be connected to the detector 18 and receive an electrical signal therefrom.

The different components within the feedback/control system 6 may be electrically connected using electrically conductive paths such as, but not limited to, wires and traces. However, communication may be otherwise as well. Communication and electrical connection, for example, may be wireless, via, e.g., microwave, RF, etc. Optical signals may also be used. Likewise, the components may be included in a single unit or separated by a distance. For example, the controller 20 may be remote or separate from the laser 10.

The methods and processes included herein, e.g., in the block diagram of Figure 4, illustrate the structure of the logic of various embodiments of the present invention that may be embodied in computer program software. Moreover, those skilled in the art will appreciate that the flow chart and description included herein may illustrate the structures of logic elements, such as computer program code elements or electronic logic circuits. Manifestly, various embodiments include a machine component that renders the logic elements in a form that instructs a digital processing apparatus (e.g., a computer, controller, processor, laptop, palm top, personal digital assistant, cell phone, kiosk, videogame, or the like, etc.) to perform a sequence of function steps corresponding to those shown. The logic may be embodied by a computer program that is executed by the processor as a series of computer- or control element-executable instructions. These instructions or data usable to generate these instructions may reside, for example, in RAM, on a hard drive, optical drive, flash card, or disc, or the instructions may be stored on magnetic tape, electronic read-only memory, or other appropriate data storage devices or computer accessible mediums that may or may not be dynamically changed or updated. Accordingly, these methods and processes, including, but not limited to, those depicted in at least some of the blocks in the flow chart of **Figure 4** may be included, for example, on magnetic discs, optical discs such as compact discs, optical disc drives, or other storage devices or mediums, both those well known in the art as well as those yet to be devised. The storage devices or mediums may contain the processing steps. These instructions may be in a format on the storage devices or mediums, for example, compressed data that is subsequently altered.

Additionally, some or all the processing can be performed all on the same device, on one or more other devices that communicates with the device, or various other combinations. The processor may also be incorporated in a network, and portions of the process may be performed by separate devices in the network. Display of information, e.g., user interface images, can be included on the device, can communicate with the device, and/or can communicate with a separate device.

As described above, although this invention has been disclosed in the context of certain preferred embodiments and examples, it will be understood by those skilled in the art that the present invention extends beyond the specifically disclosed embodiments to other alternative embodiments and/or uses of the invention and obvious modifications and equivalents thereof. In addition, while several variations of the invention have been shown and described in detail, other modifications, which are within the scope of this invention, will be readily apparent to those of skill in the art based upon this disclosure. It is also contemplated that various combinations or sub-combinations of the specific features and aspects of the embodiments may be made and still fall within the scope of the invention. It should be understood that various features and aspects of the disclosed embodiments can be combined with, or substituted for, one another in order to form varying modes of the disclosed invention. Thus, it is intended that the scope of the present invention herein disclosed should not be limited by the particular disclosed embodiments described above, but should be determined by a fair reading of the claims that follow.

## Claims

1. An excimer laser (10) comprising:

   a chamber (12) configured to contain laser gases;
   first and second electrodes (34, 38) within the chamber (12), the first and second electrodes (34, 38) configured to energize laser gases in a region between the first and second-electrodes (34, 38) to produce light-emission from the laser gases;
   a plurality of reflective elements (22, 24) forming an optical resonant cavity (14) configured to produce a laser beam from the light emission;
   a detector (18) configured to measure an energy of the laser beam;
   a gas flow apparatus (30) in fluid communication with the chamber (12); and
   a controller (20) in communication with the gas flow apparatus (30) and the detector (18), **characterized in that**;
   the gas flow apparatus (30) comprises a single canister containing a mixture of laser gases such that the single canister is the only canister of laser gases in fluid communication with the chamber (12), and **in that**
   the controller (20) is configured to adjust a flow of the laser gases from the single canister to alter a pressure in the chamber (12).

2. The excimer laser (10) of Claim 1, wherein the controller (20) is configured to adjust the flow of the laser gases to maintain a substantially constant beam energy.

3. The excimer laser (10) of Claim 1 or 2, wherein the controller (20) is configured to automatically adjust the flow of the laser gases based on feedback from the detector (18).

4. The excimer laser (10) of any of Claims 1 to 3, wherein the gas flow apparatus (30) comprises a gas source at a higher pressure than the chamber (12).

5. The excimer laser (10) of any of Claims 1 to 4, wherein the controller (20) is also in communication with at least one of the first and second electrodes (34, 38).

6. The excimer laser (10) of Claim 5, wherein the controller (20) is configured to adjust a voltage between the electrodes (34, 38) and the flow of the laser gases to maintain a substantially constant beam energy.

7. A method of extending the lifetime of an excimer laser (10) comprising a chamber (12) containing laser gases, first and second electrodes (34, 38) within the chamber(12), and a plurality of reflective elements (22,24) defining an optical resonant cavity, said method comprising:

   setting the laser gases to a first pressure;
   after setting the laser gases to the first pressure, applying a voltage to the electrodes (34, 38), thereby propagating a laser beam in the optical resonant cavity (14);
   operating the laser (10) for an amount of time;
   after the amount of time, measuring energy of the laser beam; and
   changing the pressure of the laser gases to a second pressure different from said first pressure; **characterized in that**
   the pressure is changed by injecting said chamber (12) with laser gases from a single canister (30) containing a mixture of laser gases, the single canister (30) being the only canister (30) of laser gases in fluid communication with the chamber (12),

8. The method of claim 7 further comprising:

   determining if the laser (10) is operating in an optimised state, said optimised state being selected from the group comprising a state where the laser (10) is operating at least at a minimum operating efficiency and a state where the voltage applied to the electrodes (34, 38) is less than a maximum voltage, said operating efficiency being determined from the energy of the laser beam and the voltage applied to the electrodes (34, 38);
   and changing the pressure if the laser (10) is-not operating in the optimised state.

9. The method of claim 8, further comprising generating a signal indicating that maintenance of the laser (10) is needed when the laser (10) can no longer be maintained in the optimised state.

10. The method of Claim 8 or Claim 9, wherein determining if the laser (10) is operating in the optimized state comprises determining whether the laser (10) is operating at least at the minimum operating efficiency.

11. The method of any of Claims 8 to 10, wherein determining if the laser (10) is operating in the optimized state comprises determining whether the voltage applied to the electrodes (34, 38) is less than the maximum voltage.

12. The method of any of claims 7 to 11 further comprising the steps of adjusting the voltage applied to the electrodes (34, 38) until the energy of the laser beam is substantially equal to a target energy at a first voltage.

13. The method of any of claims 7 to 12 wherein said second pressure is lower than said first pressure.

14. The method of any of claims 7 to 13 wherein after changing to the second pressure, the voltage applied to the electrodes (34, 38) is adjusted until the energy of the laser beam is substantially equal to the target energy at a second voltage.

**Patentansprüche**

1. Excimerlaser (10), umfassend:

   eine Kammer (12), welche dazu ausgebildet ist, Lasergase zu enthalten;
   erste und zweite Elektroden (34, 38) innerhalb der Kammer (12), wobei die ersten und zweiten Elektroden (34, 38) dazu ausgebildet sind, die Lasergase in einem Bereich zwischen den ersten und zweiten Elektroden (34, 38) zu erregen, um Lichtemission aus den Lasergasen zu erzeugen;
eine Mehrzahl von reflektierenden Elementen (22, 24), welche einen optischen Resonator (14) bilden, welcher dazu ausgebildet ist, aus der Lichtemission einen Laserstrahl zu erzeugen;
einen Detektor (18), welcher dazu ausgebildet ist, eine Energie des Laserstrahls zu messen;
eine Gasströmungsvorrichtung (30) in Fluidverbindung mit der Kammer (12); und
eine Regelungs-/Steuerungsvorrichtung (20) in Verbindung mit der Gasströmungsvorrichtung (30) und dem Detektor (18),
**dadurch gekennzeichnet,**
**dass** die Gasströmungsvorrichtung (30) einen einzelnen Behälter umfasst,
welcher eine Mischung von Lasergasen enthält, so dass der einzelne Behälter der einzige Behälter von Lasergasen ist, welcher in Fluidverbindung mit der Kammer (12) steht, und
**dass** die Regelungs-/Steuerungsvorrichtung (20) dazu ausgebildet ist, eine Strömung der Lasergase aus dem einzelnen Behälter einzustellen, um einen Druck in der Kammer (12) zu verändern.

2.  Excimerlaser (10) nach Anspruch 1,
wobei die Regelungs-/Steuerungsvorrichtung (20) dazu ausgebildet ist, die Strömung der Lasergase einzustellen, um eine im Wesentlichen konstante Strahlenergie aufrecht zu erhalten.

3.  Excimerlaser (10) nach Anspruch 1 oder 2,
wobei die Regelungs-/Steuerungsvorrichtung (20) dazu ausgebildet ist, die Strömung der Lasergase auf Grundlage einer Rückmeldung von dem Detektor (18) automatisch einzustellen.

4.  Excimerlaser (10) nach einem der Ansprüche 1 bis 3,
wobei die Gasströmungsvorrichtung (30) eine Gasquelle mit einem höheren Druck als die Kammer (12) umfasst.

5.  Excimerlaser (10) nach einem der Ansprüche 1 bis 4,
wobei die Regelungs-/Steuerungsvorrichtung (20) mit wenigstens einer der ersten und zweiten Elektroden (34, 38) in Verbindung steht.

6.  Excimerlaser (10) nach Anspruch 5,
wobei die Regelungs-/Steuerungsvorrichtung (20) dazu ausgebildet ist, eine Spannung zwischen den Elektroden (34, 38) und die Strömung der Lasergase einzustellen, um eine im Wesentlichen konstante Strahlenergie aufrecht zu erhalten.

7.  Verfahren zum Verlängern der Lebensdauer eines Excimerlasers (10), umfassend eine Kammer (12), welche Lasergase enthält, erste und zweite Elektroden (34, 38) innerhalb der Kammer (12) und eine Mehrzahl von reflektierenden Elementen (22, 24), welche einen optischen Resonator (14) definieren,
wobei das Verfahren umfasst:

Einstellen der Lasergase auf einen ersten Druck;
Anlegen einer Spannung an den Elektroden (34, 38), nachdem die Lasergase auf einen ersten Druck eingestellt wurden, wodurch ein Laserstrahl in dem optischen Resonator (14) propagiert wird;
Betreiben des Lasers (10) für eine Zeitspanne;
Messen von Energie des Laserstrahls nach der Zeitspanne; und
Ändern des Drucks der Lasergase auf einen zweiten Druck, welcher von dem ersten Druck verschieden ist;
**dadurch gekennzeichnet,**
**dass** der Druck durch Injektion der Kammer (12) mit Lasergasen aus einem einzelnen Behälter (30), welcher eine Mischung von Lasergasen enthält, verändert wird, wobei der einzelne Behälter (30) der einzige Behälter (30) von Lasergasen ist, welcher in Fluidverbindung mit der Kammer (12) steht.

8.  Verfahren nach Anspruch 7, ferner umfassend:

Bestimmen, ob der Laser (10) in einem optimierten Zustand arbeitet,
wobei der optimierte Zustand aus der Gruppe ausgewählt wird, umfassend einen Zustand, in welchem der Laser (10) wenigstens bei einer minimalen Arbeitsleistung / einem minimalen Wirkungsgrad arbeitet, und einen Zustand, in welchem die an den Elektroden (34, 38) angelegte Spannung kleiner als eine maximale Spannung ist, wobei die Arbeitsleistung / der Wirkungsgrad aus der Energie des Laserstrahls und der an den Elektroden (34, 38) angelegten Spannung bestimmt wird; und

Ändern des Drucks, falls der Laser (10) nicht in dem optimierten Zustand arbeitet.

9. Verfahren nach Anspruch 8, ferner umfassend:

    Erzeugen eines Signals, welches anzeigt, dass eine Wartung des Lasers (10) notwendig ist, wenn der Laser (10) nicht länger in dem optimierten Zustand aufrecht erhalten werden kann.

10. Verfahren nach Anspruch 8 oder 9,
    wobei das Bestimmen, ob der Laser (10) in dem optimierten Zustand arbeitet, ein Bestimmen umfasst, ob der Laser (10) wenigstens bei der minimalen Arbeitsleistung / dem minimalen Wirkungsgrad arbeitet.

11. Verfahren nach einem der Ansprüche 8 bis 10,
    wobei das Bestimmen, ob der Laser (10) in dem optimierten Zustand arbeitet, ein Bestimmen umfasst, ob die an den Elektroden (34, 38) angelegte Spannung kleiner als die maximale Spannung ist.

12. Verfahren nach einem der Ansprüche 7 bis 11,
    ferner umfassend die Schritte des Einstellens der Spannung, welche an den Elektroden (34, 38) angelegt wird, bis die Energie des Laserstrahls im Wesentlichen gleich einer Zielenergie bei einer ersten Spannung ist.

13. Verfahren nach einem der Ansprüche 7 bis 12,
    wobei der zweite Druck kleiner als der erste Druck ist.

14. Verfahren nach einem der Ansprüche 7 bis 13,
    wobei, nach der Änderung auf den zweiten Druck, die an den Elektroden (34, 38) angelegte Spannung eingestellt wird, bis die Energie des Laserstrahls im Wesentlichen gleich der Zielenergie bei einer zweiten Spannung ist.

**Revendications**

1. Laser à excimère (10) comprenant :

    une chambre (12) configurée pour contenir des gaz laser ;
    des première et deuxième électrodes (34, 38) dans la chambre (12), les première et deuxième électrodes (34, 38) configurées pour exciter des gaz laser dans une région située entre les première et deuxième électrodes (34, 38) afin de produire une émission de lumière à partir des gaz laser ;
    une pluralité d'éléments réfléchissants (22,24) formant une cavité optique résonante (14) configurée pour produire un faisceau laser à partir de l'émission de lumière ;
    un détecteur (18) configuré pour mesurer une énergie du faisceau laser ;
    un appareil (30) à écoulement gazeux en communication fluidique avec la chambre (12) ; et
    une unité de commande (20) en communication avec l'appareil (30) à écoulement gazeux et le détecteur (18), **caractérisé en ce que** ;
    l'appareil (30) à écoulement gazeux comprend une seule cartouche contenant un mélange de gaz laser de sorte que la seule cartouche soit la seule cartouche de gaz laser en communication fluidique avec la chambre (12), et **en ce que**
    l'unité de commande (20) est configurée pour régler un débit des gaz laser provenant de la seule cartouche afin de modifier une pression dans la chambre (12).

2. Laser à excimère (10) de la revendication 1, dans lequel l'unité de commande (20) est configurée pour régler le débit des gaz laser afin de maintenir une énergie essentiellement constante du faisceau.

3. Laser à excimère (10) de la revendication 1 ou 2, dans lequel l'unité de commande (20) est configurée pour régler automatiquement le débit des gaz laser, sur la base d'un retour en provenance du détecteur (18).

4. Laser à excimère (10) de l'une des revendications 1 à 3, dans lequel l'appareil (30) à écoulement gazeux comprend une source de gaz dont la pression est supérieure à celle de la chambre (0,12).

5. Laser à excimère (10) de l'une des revendications 1 à 4, dans lequel l'unité de commande (20) est également en communication avec au moins l'une des première et deuxième électrodes (34, 38).

**6.** Laser à excimère (10) de la revendication 5, dans lequel l'unité de commande (20) est configurée pour régler une tension entre les électrodes (34, 38) et le débit des gaz laser afin de maintenir une énergie essentiellement constante du faisceau.

**7.** Procédé d'extension de la durée de vie d'un laser à excimère (10) comprenant une chambre (12) contenant des gaz laser, des première et deuxième électrodes (34, 38) dans la chambre (12), et une pluralité d'éléments réfléchissants (22,24) définissant une cavité optique résonnante, ledit procédé comprenant le fait :

de placer les gaz laser à une première pression ;
après avoir placé les gaz laser à la première pression, d'appliquer une tension aux électrodes (34, 38), propageant ainsi un faisceau laser dans la cavité optique résonante (14) ;
d'activer le laser (10) pendant un laps de temps ;
de mesurer l'énergie du faisceau laser après la laps de temps ; et
de modifier la pression des gaz laser à une deuxième pression différente de ladite première pression ;
**caractérisé en ce que**
la pression est modifiée par l'injection des gaz laser dans ladite chambre (12) à partir d'une seule cartouche (30) contenant un mélange de gaz laser, la seule cartouche (30) étant la seule cartouche (30) de gaz laser en communication fluidique avec la chambre (12).

**8.** Procédé de la revendication 7 comprenant en outre le fait :

de déterminer si le laser (10) fonctionne à l'état optimisé, ledit état optimisé étant choisi dans le groupe comprenant un état où le laser (10) fonctionne au moins à une rendement minimal et un état où la tension appliquée aux électrodes (34, 38) est inférieure à une tension maximale, ledit rendement étant déterminé d'après l'énergie du faisceau laser et la tension appliquée aux électrodes (34, 38) ;
et de modifier la pression si le laser (10) ne fonctionne pas à l'état optimisé.

**9.** Procédé de la revendication 8, comprenant en outre le fait de générer un signal indiquant que la maintenance du laser (10) est nécessaire lorsque le laser (10) ne peut plus être maintenu à l'état optimisé.

**10.** Procédé de la revendication 8 ou 9, dans lequel le fait de déterminer si le laser (10) fonctionne à l'état optimisé comprend le fait de déterminer si le laser (10) fonctionne au moins au rendement minimal.

**11.** Procédé de l'une des revendications 8 à 10, dans lequel le fait de déterminer si le laser (10) fonctionne à l'état optimisé comprend le fait de déterminer si la tension appliquée aux électrodes (34, 38) est inférieure à la tension maximale.

**12.** Procédé de l'une des revendications 7 à 11 comprenant en outre les étapes qui consistent à régler la tension appliquée aux électrodes (34, 38) jusqu'à ce que l'énergie du faisceau laser soit essentiellement égale à une énergie cible à une première tension.

**13.** Procédé de l'une des revendications 7 à 12 dans lequel ladite deuxième pression est inférieure à ladite première pression.

**14.** Procédé de l'une des revendications 7 à 13 dans lequel, après le passage à la deuxième pression, la tension appliquée aux électrodes (34, 38) est réglée jusqu'à ce que l'énergie du faisceau laser soit essentiellement égale à l'énergie cible à une deuxième tension.

**FIG. 1**

**FIG. 2**

EP 2 140 529 B1

*FIG. 3*

FIG. 4

**EP 2 140 529 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 60920272 B
- US 4891818 A
- US 7257144 B
- US 4927231 A
- US 20070030877 A
- US 20070030876 A